# EUROPEAN PATENT SPECIFICATION

(11) **EP 4 062 160 B1**
(45) Date of publication and mention of the grant of the patent: **16.07.2025**
(21) Application number: 19953554.3
(22) Date of filing: 22.11.2019
(51) Int. Cl.: G01N 27/22, G01N 21/55, G01B 7/00, H05B 6/00, B64D 15/20, B64D 15/12, G01B 7/06

(54) **AN APPARATUS AND A METHOD FOR MONITORING ACCRETION OF ICE AND DEICING**
VORRICHTUNG UND VERFAHREN ZUR ÜBERWACHUNG DER EISBILDUNG UND ENTEISUNG
APPAREIL ET PROCÉDÉ PERMETTANT DE SURVEILLER L'ACCRÉTION DE LA GLACE ET LE DÉGIVRAGE

(43) Date of publication of application: 28.09.2022
(73) Proprietor: KOC Universitesi, 34450 Istanbul (TR)
(72) Inventor: LAZOGLU, Ismail, 34450 Sar yer/Istanbul (TR); KHAN, Shaheryar Atta, 34450 Sar yer/Istanbul (TR); MALIK, Anjum Naeem, 34450 Sar yer/Istanbul (TR)
(74) Representative: Dericioglu, E. Korhan
(86) International application number: PCT/TR2019/050987
(87) International publication number: WO 2021/101465

(56) References cited:
- EP-A1- 2 915 748
- EP-A1- 2 915 748
- WO-A1-03/050778
- WO-A1-2014/181014
- WO-A1-94/20819
- WO-A1-94/20819
- JP-A- H06 337 255
- US-A- 4 851 817
- US-A1- 2008 088 321
- US-A1- 2008 088 321
- US-A1- 2015 103 867
- US-A1- 2019 193 863
- US-B1- 7 439 877

## Description

### Field of the Invention

The present invention relates to an apparatus and a method for detecting the formation of ice on a surface, and for deicing the said surface.

### Background of the Invention

Ice detection devices are electrical sensing devices which are specially designed to detect and measure the presence of ice, and its accretion rate on cold surfaces. Ice detection devices are commonly used in refrigerators, wind turbines, aircraft wings, roads, and rooftops to sense the presence of ice. The output of the ice detection device might trigger a deicing system to remove the deposited ice mechanically, thermally, or chemically.

Ice deposition has adverse effects on the functionality of various systems such as refrigerators, wind turbines, aircrafts, etc. Typically, in refrigeration systems the ice grows in the form of a frost on the fin surface of the heat exchanger. This frosting hinders the heat flow, deteriorating the heat transfer performance and the system's overall coefficient of performance (COP). In wind turbines, ice deposition on the turbine blades causes a reduction or a complete loss in power production due to disrupted aerodynamics. Similarly, ice deposition on aircrafts' wings disturbs its aerodynamics and has resulted in several crash incidents. In the US alone, more than 228 plane crash incidents were reported due to icing during the period of 2006 to 2010.

In order to address this icing problem, various ice detection and deicing systems have been proposed. However, the functionality of these systems stays limited to a specific application and operating conditions. For instance, systems which are designed for aircrafts fail to perform effectively when they are mounted on a refrigerator's heat exchanger or wind turbine. This shows that the icing is a complex phenomenon that depends on several physical parameters, and it becomes extremely difficult to accurately detect ice deposition with a single type of sensing.

In the state of the art, an ice detection and deicing system comprises separate detection and deicing modules. The detection module comprises a sensor that detects the presence of ice either on the whole cold surface or at pre-defined points. The deicing module comprises a mechanism that removes the deposited ice by triggering either a mechanical, chemical, or a thermal response.

Icing can be detected either directly or indirectly. The direct methods detect changes in some properties caused by the accretion of ice. Said properties include mass, light reflective properties, electrical or thermal conductivity, impendence, capacitance and inductance. The indirect methods are based upon detecting parameters that lead to icing such as temperature drop and humidity.

Various types of sensors have been employed in the ice detection systems. The operability of a sensor is always dependent on certain operating conditions. For instance, optical type sensors perform well in case of point detection but fail to give satisfactory results in case of surface detection. On the other hand, capacitive type sensors show promising results for surface type detection but fail to detect ice during multiple icing and deicing cycles. When ice melts into water, the capacitance goes up rather than going down as water has higher value of dielectric constant than ice, which leads to erroneous results.

Various examples of deicing mechanisms can be found such as the periodic deactivation of compressors in refrigeration systems, mechanical vibrations to detach ice from a surface, chemical de-icing of rooftops and roads using rock salt, and the heating of the iced surface using heating elements.

The United States patent application numbered US5134380A in the state of the art discloses a device and method for detecting the nature and condition of ice, water or air on a surface by producing output signals by measurement of dynamic dielectric constant and electrical conductivity of the material on the surface and decoding digital signals therefrom.

The United States patent application numbered US2010078521A1 in the state of the art discloses a device for detecting and eliminating a layer of ice formed on the surface of an aircraft structure (6) or a liquid that has infiltrated inside of a structure and/or into the material of the structure.

The United States patent application numbered US4851817 in the state of the art discloses a system for automatic and real time detection of water and icing on surfaces by monitoring variations in light energy transmitted through an optical fiber having a specially processed sensitive area probe. The sensitive probe area is positioned on, about or within the surface on which icing is to be detected. Because of differences in optical indices of refraction and energy absorption characteristics of air, water and ice, the presence of each of these at the processed sensitive area will cause a proportional and characteristic attenuation of the light energy passing through the optical fiber.

The United States patent application numbered US2015/103867A1 discloses a method of detecting ice formation on an aircraft. The method comprises disposing an ice detector on an exterior surface of the aircraft, the ice detector comprising a probe surface and a pyroelectric material layer disposed on at least a portion of the probe surface. The method further comprises generating a charge on a surface of the pyroelectric material layer of the ice detector to increase the local freezing point of water on the surface of the pyroelectric material layer.

The United States patent application numbered US7439877B1 discloses an ice detection method for aircraft, which involves using icing data from multiple ice sensor locations to construct map of icing conditions occurring on aircraft and estimating current weight penalty due to icing.

The United States patent application numbered US2019/193863A1 discloses a system comprising: exposed AC electrode, dielectric layer, embedded electrode, sliding/nanosecond electrode, ground plane, AC power supply, DC power supply, nanosecond range pulse generator, monitoring capacitor, high voltage probe, control module, temperature sensor, control signal input module and monitoring system. The system senses ice formation and generates extensive surface heating to prevent ice accumulation.

The European patent application numbered EP2915748A1 discloses a system and method for operating an ice detection and deicing system. The ice detection and deicing system may use changing magnetic properties of various components caused by temperature changes to detect conditions conducive to, or indicating, ice formation. The ice detection and deicing system may further use eddy currents induced in one or more layers of the system to increase the temperature of the one or more layers to reduce the amount of ice formation or reduce the probability of ice being formed.

The problem of precisely detecting the presence of ice along with its accretion rate remains unaddressed in the state of the art. Additionally, the ice detecting and deicing systems in the state of the art use separate modules for detecting and deicing, which causes increased number of components to be used, and thus an increase in the overall weight and power consumption of the system.

None of the documents in the state of the art disclose a solution as in the present application.

### Short Description of the Invention

The objective of the invention is to provide an apparatus and a method for detecting the formation of ice on a surface with increased accuracy, and for deicing the said surface.

### Detailed Description of the Invention

The electrical apparatus in order to fulfill the objects of the present invention is illustrated in the attached figures, where:
- **Figure** 1.: Is a view of the embodiment having an optical couple and two electrodes
- **Figure 2.**: Is a view of the embodiment having an optical couple and an inductor coil

Elements shown in the figures are individually numbered, and the correspondence of these numbers are given as follows:
**1.** Apparatus
**2.** Electrode
**3.** Optical couple
**4.** Driving means
**5.** Capacitance measuring means
**6.** Two-way switch
**7.** On/off switch
**8.** Control unit
**9.** Inductor coil
**10.** Inductance measuring means

According to a first aspect of the invention, an apparatus (1) for detecting the formation of ice on a surface with increased accuracy, and for deicing the said surface is defined in claim 1. The electrodes (2) might be configured in interdigital, spiral, and/or circular geometries, however, the possible configurations are not limited by these.

When the electrodes (2) are placed on a surface or at a proximity thereof, they have a capacitance. When ice starts to form on the said surface, the capacitance of the electrodes (2) changes. Using this change in the capacitance, the formation of ice could be detected. Here, the word proximity is used for defining a distance at which, the formation of ice on the said surface causes the capacitance of the electrodes (2) to detectably change.

When the inductor coil (9) is placed on a surface or at a proximity thereof, they have an inductance. When ice starts to form on the said surface, the inductance of the inductor coil (9) changes. Using this change in the inductance, the formation of ice could be detected. Here, the word proximity is used for defining a distance at which, the formation of ice on the said surface causes the inductance of the inductor coil (9) to detectably change

The apparatus (1) comprises at least one optical couple (3) comprising at least one emitter and at least one receiver. The emitter emits visible and/or invisible light. When the emitted light reaches a surface, at least some amount of it returns to the receiver according to the physical properties of the said surface. The returning light causes at least one physical property, such as electrical resistance, of the receiver to change. The presence of and/or the proximity to ice changes the amount of the reflected light thereby changing the amount of light received by the receiver and thus, the output of the receiver changes according to the presence and the proximity of ice. The sensors that could be used with the present invention include, but not limited to, inductive sensors, impedance change sensors, resonance frequency probe sensors, ultrasonic sensors and microwave sensors. What is important is that the accretion of ice causes at least one parameter of the sensor to change.

In the embodiment of the invention where both optical couple (3) and the electrodes (2) are used, the optical couple (3) is located between two electrodes (2). By this way, both the optical couple (3) and the electrodes (2) could measure the same portion of a surface.

In the embodiment of the present invention where electrodes (2) are used, the inventive apparatus (1) may comprise at least one capacitance-to-analog converter. In this embodiment, the electrodes (2) are connected to the said capacitance-to-analog converter. The capacitance-to-analog converter measures the capacitance of the electrodes (2) and sends this information to the control unit (8) via an analog input, digital input or a communication pin of the control unit (8). The capacitance of the electrodes (2) might be measured, as well, via a resonance circuit such as an LC, RC or RLC circuit. Here, the C component of the said circuits is formed, at least partially, by the electrodes (2). The said means for measuring the capacitance will be referred to as capacitance measuring means (5).

In the embodiment of the present invention where inductor coil (9) is used, the inventive apparatus (1) may comprise at least one inductance-to-analog converter. In this embodiment, the inductor coil (9) is connected to the said inductance-to-analog converter. The inductance-to-analog converter measures the inductance of the inductor coil (9) and sends this information to the control unit (8) via an analog input, digital input or a communication pin of the control unit (8). The inductance of the inductor coil (9) might be measured, as well, via a resonance circuit such as an LC, RL or RLC circuit. Here, the L component of the said circuits is formed, at least partially, by the inductor coil (2). The said means for measuring the inductance will be referred to as inductance measuring means (10).

The control unit (8) is configured to acquire and/or measure the capacitance of the electrodes (2), and to calculate a reference regarding the formation of ice using said capacitance. The control unit (8) is also configured to receive the output of the optical couple (3) and to calculate a reference regarding the formation of ice using said output. The electrodes (2) and/or the optical couple (3) might be connected to an analog input and/or a digital input and/or a communication pin of the control unit (8). Said connection might also be connected to a resistor for pull-up and/or pull-down purposes or for discharging the capacitor formed by the electrodes (2).

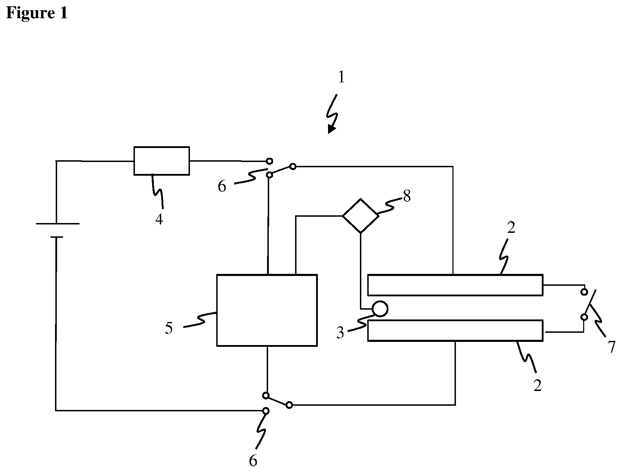

According to the invention, the electrodes (2) could be used as a heating means as well. At least one electrode (2) is connected to a two-way switch (6). The two-way switch (6) has at least two different positions, it might, as well, have more than two positions. In one position, the said switch electrically connects the said electrode (2) to the capacitance measuring means (5), and in the other position, said switch connects the said electrode (2) to a power source, directly or via a driving means (4). There is at least one on-off switch (7) for electrically connecting the two electrodes (2) to each other. The on/off switch (7) might comprise multiple positions, what is important is that it has on and off positions. When the two-way switch (6) connects the electrode (2) to the power source, the on/off switch (7) connects the two electrodes (2) such that the current from the power source flows over the two electrodes (2). This flow of current causes the electrodes (2) to heat, thereby melting the ice forming under and around the electrodes (2). The apparatus (1) might comprise another two-way switch having at least two different positions for connecting the other electrode (2) to the power source as well. An example for this application is given in Fig. 1. The positions of the two-way switches (6) and the on/off switch is controlled by the control unit (8). The said two-way switches (6) and the on-off switch (7) enables switching the electrodes (2) from sensing (measuring) mode to heating mode, or vice-versa.

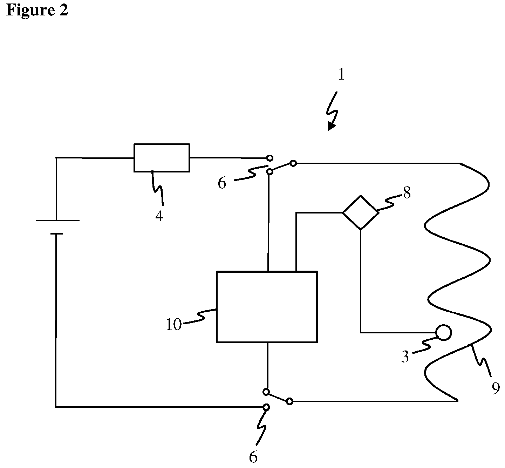

According to the invention, the inductor coil (9) can be used as a heating means as well. At least one end of the inductor coil (9) is connected to a two-way switch (6). The two-way switch (6) has at least two different positions, it might, as well, have more than two positions. In one position, the said switch electrically connects the said inductor coil (9) to the inductance measuring means (10), and in the other position, said switch connects the said inductor coil (9) to a power source, directly or via a driving means (4). When the two-way switch (6) connects the inductor coil (9) to the power source, the power source provides a high frequency current. Here, the term high frequency is used in a sense that the said frequency allows the inductor coil (9) to be heated. This flow of current causes the inductor coil (9) to heat, thereby melting the ice forming under and around the inductor coil (9). The apparatus (1) might comprise another two-way switch (6) having at least two different positions for connecting the other electrode (2) to the power source as well. An example for this application is given in Fig. 2. The positions of the two-way switches (6) is controlled by the control unit (8). The said two-way switches (6) enables switching the inductor coil (9) from sensing (measuring) mode to heating mode, or vice-versa.

According to a second aspect of the invention, a method (100) for monitoring accretion of ice and deicing is defined in claim 6.

The control unit (8) is adapted to run the steps of the above-mentioned method (100).

## Claims

1. An apparatus (1) for detecting the formation of ice on a surface with increased accuracy, and for deicing the said surface comprising:
- at least two electrodes (2) configured so that their capacitance changes according to the presence and proximity of ice and/or at least one inductor coil (9) configured so that its inductance changes according to the presence and the proximity of the ice,
- at least one optical couple (3) comprising at least one emitter and at least one receiver, and the output of the at least one receiver is configured to change according to the presence and the proximity of ice,
- at least one of:
∘ at least one capacitance measuring means (5) configured to measure the capacitance of the electrodes (2) when the at least two electrodes (2) are utilized,
∘ at least one inductance measuring means (10) configured to measure the inductance of the inductor coil (9) when the at least one inductor coil (9) is utilized,
- at least one control unit (8) configured to acquire and/or measure the capacitance of the electrodes (2) and/or the inductance of the inductor coil (9) and calculate a reference regarding the information of ice using said capacitance and/or inductance, and receive the output of the optical couple (4) and calculate a reference regarding the formation of ice using said output,
and **characterized in that,**
- at least one two-way switch (6) is configured to connect the inductor coil (9) or at least one of the two electrodes (2) to either a power source or the inductance measuring means (10) or the capacitance measuring means (5), and at least one on/off switch (7) electrically connects or disconnects the electrodes (2) to/from each other, when the at least two electrodes (2) are utilized, thereby enabling switching the electrodes (2) from measuring mode to heating mode or vice-versa and wherein the power source is a high-frequency power source which enables inductive heating, when the at least one inductor coil (9) is utilized.

2. An apparatus (1) as in claim 1, wherein the at least two electrodes (2) are configured in interdigital, spiral, and/or circular geometries or any other geometry.

3. An apparatus (1) as in claim 1, wherein the optical couple (3) is located between two electrodes (2).

4. An apparatus as in claim 1, wherein the capacitance measuring means (5) is a capacitance-to-analog converter, an LC circuit, an RC circuit, and/or an RLC circuit.

5. An apparatus as in claim 1, wherein the inductance measuring means (10) is an inductance-to-analog converter, an LC circuit, and RL circuit and/or an RLC circuit.

6. A method (100) for monitoring accretion of ice and deicing comprising the steps of:
- receiving the output of an optic couple (3) (101),
- Determining if the received output is greater than a threshold value and returning to step 101 if the received output is not greater than the said threshold value (102),
- charging and discharging at least two electrodes (2) at a predefined frequency when electrodes (2) are used (103),
- acquiring a capacitance value of the electrodes (2) when the electrodes (2) are used and/or an inductance value of an inductor coil (9) when the inductor coil is used (104),
- determining if the thickness corresponding to the said capacitance and/or inductance is greater than a threshold value and returning to step 104 if the thickness is not greater than the said threshold value (105), and
**characterized in that** it further comprises the steps of:
- stopping the charging and discharging of the electrodes (2), and starting heating of the electrodes (2) and/or the inductor coil (9) (106),
- receiving the output of the optic couple (3) (107),
- determining if the received output is greater than a threshold value and returning to step 107 if the received output is not greater than the said threshold value (108),
- stopping heating of the electrodes (2) and/or the inductor coil (9) and returning to step 102 (109).

7. A computer program product comprising instructions which, when the program is executed by a computer, cause the computer to execute the steps of the method of claim 6.

8. A computer-readable medium having stored thereon the computer program product of claim 7.

## Patentansprüche

1. Vorrichtung (1) zum Erfassen der Eisbildung auf einer Oberfläche mit erhöhter Genauigkeit und zum Enteisen der genannten Oberfläche, umfassend:
- mindestens zwei Elektroden (2), die derart konfiguriert sind, dass sich ihre Kapazität entsprechend dem Vorhandensein und der Nähe von Eis ändert, und/oder mindestens eine Induktionsspule (9), die derart konfiguriert ist, dass sich ihre Induktivität entsprechend dem Vorhandensein und der Nähe von Eis ändert,
- mindestens ein Optokoppler (3), der mindestens einen Sender und mindestens einen Empfänger umfasst und wobei die Ausgabe des mindestens einen Empfängers so konfiguriert ist, dass er sich entsprechend dem Vorhandensein und der Nähe von Eis ändert,
- mindestens einen von:
∘ mindestens einer Kapazitätsmessvorrichtung (5), die so konfiguriert ist, dass sie die Kapazität der Elektroden (2) misst, wenn die mindestens zwei Elektroden (2) benutzt werden,
∘ mindestens einer Induktivitätsmessvorrichtung (10), die so konfiguriert ist, dass sie die Induktivität der Induktionsspule (9) misst, wenn die mindestens eine Induktionsspule (9) benutzt wird,
- mindestens eine Steuereinheit (8), die so konfiguriert ist, dass sie die Kapazität der Elektroden (2) und/oder die Induktivität der Induktionsspule (9) erfasst und/oder misst und anhand dieser Kapazität und/oder Induktivität einen Referenzwert in Bezug auf die Eisinformationen berechnet, sowie die Ausgabe des Optokopplers (4) empfängt und anhand dieser Ausgabe einen Referenzwert in Bezug auf die Eisbildung berechnet, und **gekennzeichnet durch,**
- mindestens einen Zweiwegeschalter (6), der so konfiguriert ist, dass er die Induktionsspule (9) oder mindestens eine der beiden Elektroden (2) entweder mit einer Stromquelle oder mit der Induktivitätsmessvorrichtung (10) oder der Kapazitätsmessvorrichtung (5) verbindet und wobei mindestens ein Ein-/Ausschalter (7) die Elektroden (2) elektrisch miteinander verbindet oder voneinander trennt, wenn die mindestens zwei Elektroden (2) benutzt werden, wodurch ein Umschalten der Elektroden (2) vom Messmodus in den Heizmodus oder umgekehrt ermöglicht wird und
wobei die Stromquelle eine Hochfrequenzstromquelle ist, die eine induktive Erwärmung ermöglicht, wenn die mindestens eine Induktionsspule (9) benutzt wird.

2. Vorrichtung (1) nach Anspruch 1, wobei die mindestens zwei Elektroden (2) in interdigitaler, spiralförmiger und/oder kreisförmiger Geometrie oder einer beliebigen anderen Geometrie ausgebildet sind.

3. Vorrichtung (1) nach Anspruch 1, wobei sich der Optokoppler (3) zwischen zwei Elektroden (2) befindet.

4. Vorrichtung nach Anspruch 1, wobei die Kapazitätsmessvorrichtung (5) ein Kapazität-zu-Analog-Umsetzer, ein LC-Schwingkreis, ein RC-Schwingkreis und/oder ein RLC-Schwingkreis ist.

5. Vorrichtung nach Anspruch 1, wobei die Induktivitätsmesseinrichtung (10) ein Induktivität-zu-Analog-Umsetzer, ein LC-Schwingkreis, ein RL-Schwingkreis und/oder ein RLC-Schwingkreis ist.

6. Verfahren (100) zur Überwachung der Eisbildung und Enteisung, umfassend die Schritte:
- Empfang der Ausgabe eines Optokopplers (3) (101),
- Ermitteln, ob die empfangene Ausgabe größer als ein Schwellenwert ist, und Rückkehr zu Schritt 101, wenn die empfangene Ausgabe nicht größer als der genannte Schwellenwert ist (102),
- Aufladen und Entladen von mindestens zwei Elektroden (2) mit einer vordefinierten Frequenz, wenn Elektroden (2) verwendet werden (103),
- Erfassen eines Kapazitätswerts der Elektroden (2), wenn die Elektroden (2) benutzt werden, und/oder eines Induktivitätswerts einer Induktionsspule (9), wenn die Induktionsspule benutzt wird (104),
- Ermitteln, ob die Dicke, die der genannten Kapazität und/oder Induktivität entspricht, größer als ein Schwellenwert ist, und Rückkehr zu Schritt 104, wenn die Dicke nicht größer als der genannte Schwellenwert ist (105), und **dadurch gekennzeichnet, dass** es ferner die folgenden Schritte umfasst:
- Beenden des Ladens und Entladens der Elektroden (2) und Starten des Erhitzens der Elektroden (2) und/oder der Induktionsspule (9) (106),
- Empfang der Ausgabe des Optokopplers (3) (107),
- Ermitteln, ob die empfangene Ausgabe größer als ein Schwellenwert ist, und Rückkehr zu Schritt 107, wenn die empfangene Ausgabe nicht größer als der genannte Schwellenwert ist (108),
- Beenden des Erhitzens von Elektroden (2) und/oder der Induktionsspule (9) und Rückkehr zu Schritt 102 (109).

7. Ein Computerprogrammprodukt, das Anweisungen umfasst, die, wenn das Programm von einem Computer ausgeführt wird, den Computer veranlassen, die Schritte des Verfahrens nach Anspruch 6 auszuführen.

8. Ein computerlesbares Medium, auf dem das Computerprogrammprodukt gemäß Anspruch 7 gespeichert ist.

## Revendications

1. Un dispositif (1) destiné à détecter la formation de glace sur une surface avec une précision accrue, et à dégivrer ladite surface, comprenant :
- au moins deux électrodes (2), configurées de sorte que leur capacité varie en fonction de la présence et de la proximité de la glace, et/ou au moins une bobine d'induction (9) configurée de sorte que son inductance varie en fonction de la présence et de la proximité de la glace ;
- au moins un couple optique (3) comprenant au moins un émetteur et au moins un récepteur, et la sortie dudit récepteur étant configurée pour varier en fonction de la présence et de la proximité de la glace ;
- au moins l'un des éléments suivants :
∘ au moins un moyen de mesure de capacité (5), configuré pour mesurer la capacité des électrodes (2) lorsqu'au moins deux électrodes (2) sont utilisées ;
∘ au moins un moyen de mesure d'inductance (10), configuré pour mesurer l'inductance de la bobine d'induction (9) lorsqu'au moins une bobine d'induction (9) est utilisée ;
- au moins une unité de commande (8), configurée pour acquérir et/ou mesurer la capacité des électrodes (2) et/ou l'inductance de la bobine d'induction (9), et pour calculer une référence relative à la présence de glace à partir de ladite capacité et/ou inductance, ainsi que pour recevoir la sortie du couple optique (4) et calculer une référence relative à la formation de glace à partir de ladite sortie ;
et **caractérisé en ce que** :
- au moins un commutateur bidirectionnel (6) est configuré pour connecter la bobine d'induction (9) ou au moins l'une des deux électrodes (2) soit à une source d'alimentation, soit au moyen de mesure d'inductance (10), soit au moyen de mesure de capacité (5), et au moins un interrupteur marche/arrêt (7) est configuré pour connecter ou déconnecter électriquement les électrodes (2) l'une de l'autre, lorsqu'au moins deux électrodes (2) sont utilisées, permettant ainsi de faire passer les électrodes (2) du mode de mesure au mode de chauffage, ou inversement ; et
dans lequel la source d'alimentation est une source haute fréquence permettant le chauffage par induction lorsqu'au moins une bobine d'induction (9) est utilisée.

2. Un dispositif (1) selon la revendication 1, dans lequel les au moins deux électrodes (2) sont configurées selon des géométries interdigitées, en spirale, et/ou en cercle ou selon toute autre géométrie adaptée.

3. Un dispositif (1) selon la revendication 1, dans lequel le couple optique (3) est positionné entre deux électrodes (2).

4. Un dispositif selon la revendication 1, dans lequel le moyen de mesure de capacité (5) comprend un convertisseur de capacité en signal analogique, un circuit LC, un circuit RC et/ou un circuit RLC.

5. Un dispositif selon la revendication 1, dans lequel le moyen de mesure d'inductance (10) comprend un convertisseur d'inductance en signal analogique, un circuit LC, un circuit RL et/ou un circuit RLC.

6. Un procédé (100) de surveillance de l'accrétion de glace et de dégivrage, comprenant les étapes suivantes :
- recevoir la sortie d'un couple optique (3) (101) ;
- déterminer si la sortie reçue est supérieure à une valeur seuil et revenir à l'étape 101 si la sortie reçue n'est pas supérieure à ladite valeur seuil (102) ;
- charger et décharger au moins deux électrodes (2) à une fréquence prédéfinie lorsque les électrodes (2) sont utilisées (103) ;
- acquérir une valeur de capacité des électrodes (2), lorsque les électrodes (2) sont utilisées, et/ou une valeur d'inductance d'une bobine d'induction (9) lorsqu'elle est utilisée (104) ;
- déterminer si l'épaisseur correspondant à ladite capacité et/ou inductance est supérieure à une valeur seuil et revenir à l'étape 104 si l'épaisseur n'est pas supérieure à ladite valeur seuil (105) ; et
**caractérisé en ce qu'il** comprend en outre les étapes suivantes :
- interrompre le chargement et le déchargement des électrodes (2), et démarrer le chauffage des électrodes (2) et/ou de la bobine d'induction (9) (106) ;
- recevoir la sortie du couple optique (3) (107) ;
- déterminer si la sortie reçue est supérieure à une valeur seuil et revenir à l'étape 107 si la sortie reçue n'est pas supérieure à ladite valeur seuil (108) ;
- interrompre le chauffage des électrodes (2) et/ou de la bobine d'induction (9), et revenir à l'étape 102 (109).

7. Un produit programme d'ordinateur comprenant des instructions qui, lorsqu'il est exécuté par un ordinateur, amènent celui-ci à exécuter les étapes du procédé selon la revendication 6.

8. Un support lisible par ordinateur sur lequel est enregistré le produit programme d'ordinateur selon la revendication 7.
